# DEMANDE DE BREVET EUROPEEN

(11) **EP 3 456 575 A1**
(43) Date de publication de la demande: **20.03.2019**
(21) Numéro de dépôt: 18192151.1
(22) Date de dépôt: 03.09.2018
(51) Int. Cl.: B60K 37/02, B60H 1/00, B60H 3/00, B60H 3/06

(54) **SYSTEME D'AFFICHAGE D'INFORMATION DE VEHICULE**

(30) Priorité: 19.09.2017 FR 1758676
(71) Demandeur: PSA Automobiles SA, 78300 Poissy (FR)
(72) Inventeur: PERRIER-THEROND, CLOTILDE, 91440 BURES SUR YVETTE (FR); DEBONNET, MICHAEL, 92310 SEVRES (FR); NEILDEZ, AUDE, 78870 BAILLY (FR); MOTTIER, ROMAIN, 75014 PARIS 14 (FR)

(57) **Abrégé**

Système d'affichage d'information d'un véhicule automobile affichant simultanément le niveau de qualité de l'air à l'extérieur du véhicule et le niveau de qualité de l'air à l'intérieur de l'habitacle du véhicule, ledit système comprenant un pictogramme symbolisant une fonction de traitement de l'air visant à améliorer la qualité de l'air à l'intérieur de l'habitacle, ledit pictogramme comportant un premier motif représentatif du niveau de qualité de l'air à l'extérieur du véhicule et un deuxième motif représentatif du niveau de qualité de l'air à l'intérieur de l'habitacle du véhicule ; les premier et/ou deuxième motifs indiquant, par une animation visuelle déterminée et pendant toute la durée du traitement, le niveau de qualité de l'air à l'extérieur et/ou à l'intérieur de l'habitacle ainsi que son évolution pendant toute la durée du traitement.

## Description

La présente invention concerne de manière générale un système d'affichage d'information concernant un véhicule et plus particulièrement un système d'affichage de retour d'information sur le traitement de l'air de l'habitacle d'un véhicule automobile visant à informer les usagers du véhicule de la qualité de l'air avant et après traitement ainsi que l'état d'avancement du processus de traitement et de son efficacité.

Actuellement, l'information du niveau de qualité de l'air extérieur est généralement obtenue soit via la consultation d'informations provenant de serveurs distants des véhicules et qui communiquent avec les véhicules via des moyens de communication embarqués dans les véhicules dits « véhicules connectés », soit par des informations obtenues directement par un capteur de qualité de l'air embarqué par les véhicules, soit les deux.

Pour mesurer le niveau de qualité de l'air à l'intérieur de l'habitacle il est connu d'utiliser un dispositif de surveillance comportant au moins un capteur chargé d'effectuer des mesures représentatives de la concentration d'au moins une espèce chimique (généralement des polluants sous forme gazeuse ou solide) dans l'air qui est contenu dans, ou qui doit alimenter, cet habitacle. Généralement ce type de capteur présente un ou plusieurs éléments résistifs en technologie MOX (« Metal Oxyde semi-conducteur »), chaque élément résistif ayant une résistance variant en fonction de la concentration d'un unique gaz inodore, comme par exemple le dioxyde d'azote (ou NO₂) ou le monoxyde de carbone (ou CO), ou odorant, comme par exemple un gaz carboné de type CₓH_{y}.

Lorsque le capteur détecte que la concentration d'une espèce chimique devient supérieure à un seuil, le dispositif de surveillance interdit l'alimentation de l'habitacle en air extérieur (et donc seul de l'air recirculé (c'est-à-dire issu de l'habitacle) alimente ce dernier) et/ou il déclenche une purification de l'air contenu dans l'habitacle par exemple par ionisation et/ou filtrage.

Pour commander et afficher toutes les informations relatives au traitement de l'air, il est connu notamment du document DE10201117748 un système de commande et d'affichage utilisant un bouton de commande associé à un écran pour afficher les différentes pages d'écran suivant une arborescence complexe.

Ce système ne rend pas compte de l'évolution du traitement ni de son efficacité.

Il est également connu de certains véhicules d'afficher l'information de qualité d'air extérieur sur un écran monopolisant toute la surface ce l'écran pour pouvoir visualiser cette information sans pour autant pouvoir visualiser l'évolution du traitement ni son efficacité.

La visualisation de cette information monopolise par ailleurs une zone importante d'affichage de l'écran qui par le fait n'est plus utilisable pour d'autres informations de conduite. Alors que les utilisateurs peuvent dans certaines situations de vie avoir uniquement besoin d'être rassurés sur la qualité de l'air les entourant et le fait que le système les protège.

Un but de la présente invention est de répondre aux inconvénients mentionnés ci-dessus et en particulier, de proposer un système d'affichage d'information sur la qualité de l'air qui rassure les passagers sur le niveau de qualité de l'air dans l'habitacle en leur permettant de suivre l'évolution du traitement de l'air et son efficacité.

Ce système, par le retour d'information en temps réel qu'il donne sur le niveau de pollution de l'air extérieur et celui de l'habitacle renforce l'attrait, pour les utilisateurs, de cette fonction tout en leur procurant une sensation de protection et donc de bienêtre. La valorisation de la fonction pour le constructeur en est ainsi accrue.

Pour cela un premier aspect de l'invention concerne un système d'affichage d'information d'un véhicule automobile affichant simultanément le niveau de qualité de l'air à l'extérieur du véhicule et le niveau de qualité de l'air à l'intérieur de l'habitacle du véhicule, ledit système comprenant un pictogramme symbolisant une fonction de traitement de l'air visant à améliorer la qualité de l'air à l'intérieur de l'habitacle, ledit pictogramme comportant un premier motif représentatif du niveau de qualité de l'air à l'extérieur du véhicule et un deuxième motif représentatif du niveau de qualité de l'air à l'intérieur de l'habitacle du véhicule ; les premier et/ou deuxième motifs indiquant, par une animation visuelle déterminée et pendant toute la durée du traitement, le niveau de qualité de l'air à l'extérieur et/ou à l'intérieur de l'habitacle ainsi que son évolution pendant toute la durée du traitement.

Selon une caractéristique, l'animation visuelle consiste en au moins un changement de couleur des premier et/ou deuxième motifs en fonction de l'évolution du niveau de qualité de l'air.

Selon une autre caractéristique, le premier motif peut prendre une couleur déterminée choisie parmi un premier groupe déterminé de couleurs ; chacune des couleurs correspondant à un niveau de qualité de l'air extérieur.

Selon une autre caractéristique, le deuxième motif peut prendre une couleur déterminée choisie parmi un deuxième groupe déterminé de couleurs ; chacune des couleurs correspondant à un niveau de qualité de l'air à l'intérieur de l'habitacle.

Selon une autre caractéristique, les premier et deuxième motifs représentent respectivement des première et deuxième parties d'au moins une flèche directionnelle symbolisant le cheminement de l'air depuis l'extérieur du véhicule jusqu'à l'intérieur de l'habitacle du véhicule.

Selon une autre caractéristique, le premier motif représente un nuage et le deuxième motif représente le contour d'un véhicule.

Selon une autre caractéristique, l'absence d'un des premier ou deuxième motifs et/ou l'utilisation d'une couleur différente des premiers et deuxième groupes déterminés de couleurs, indique l'indisponibilité de l'information relative au niveau de qualité d'air.

Selon une autre caractéristique, le pictogramme dédié à l'information du niveau de qualité de l'air, fait partie d'un bandeau de témoins de signalisation de véhicule automobile comportant au moins un deuxième pictogramme dédié à l'information de recyclage de l'air à l'intérieur de l'habitacle.

Selon une autre caractéristique, l'affichage du pictogramme dédié à l'information du niveau de qualité de l'air se substitue à celui du pictogramme de recyclage d'air quand la fonction de traitement visant à améliorer la qualité de l'air à l'intérieur de l'habitacle est activée.

L'invention a pour autre objet un véhicule automobile comprenant le système d'affichage tel que décrit ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 illustre, sous la forme d'un tableau, le code couleurs retenu par le standard international pour définir les index de qualité de l'air (AQI) qui sont exploités par le système d'affichage d'information selon la présente invention ;
- la figure 2 illustre schématiquement un système d'affichage d'information selon l'invention exploitant un pictogramme représentatif d'une fonction de traitement de l'amélioration de la qualité de l'air à l'intérieur de l'habitacle du véhicule ;
- la figure 3 illustre, sous la forme d'un tableau, les différents états du pictogramme du système d'affichage selon l'invention dans un exemple de représentation fonctionnelle ;
- les figures 4 et 5, illustrent respectivement, les différentes configurations d'affichages d'un bandeau de témoins de signalisation dédié à une climatisation bizone avec la fonction de traitement d'amélioration de la qualité de l'air à l'intérieur de l'habitacle d'air non active OFF (Fig. 4) et active ON (Fig. 5) ; et
- la figure 6 illustre un exemple de représentation fonctionnelle d'un état du pictogramme du système d'affichage selon l'invention mise en correspondance avec un exemple de représentation stylisée pour le même état.

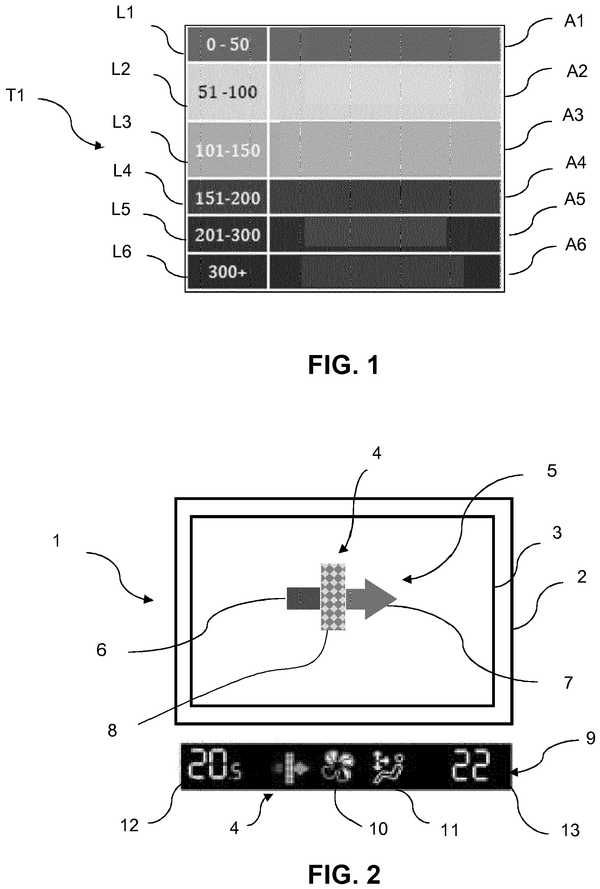

La figure 1 est un tableau T1 extrait du standard international AQI (Air Quality Index) associant la concentration de particules nocives pour la santé à une appréciation de leur l'impact sur la santé et un code couleur.

L'échelle d'appréciation comporte six niveaux A1-A6, chaque niveau correspondant à un intervalle de concentration de particules L1-L6, exprimé en ppm. : 0-50, 51-100, 101-150, 151-200, 201-300, 300+ (Pour plus de détails, notamment sur la nature des particules considérées, on se reportera à la définition précise du standard)

Le tableau T1 de la figure 1 récapitule les six niveaux L1-L6 avec les six couleurs associées : Vert, Jaune, Orange, Rouge, Violet et Marron auxquelles correspondent respectivement les appréciations d'impact sur la santé : Bonne, Moyenne, Nocive pour des Populations Sensibles, Nocive, Très Nocive, Dangereuse. Ainsi, en considérant les conditions extrêmes : une concentration de « 0-50 » correspond à une appréciation « Bonne » avec une couleur « Verte » et une concentration de « 300+ » correspond à une appréciation « Dangereuse » avec une couleur « Marron ».

Dans l'exemple considéré dans la présente invention, une septième couleur (Gris) est utilisée pour définir l'indisponibilité L7 de la mesure ou la désactivation de la fonction de traitement d'air.

La figure 2 illustre un système 1 d'affichage d'information sur le niveau de qualité de l'air entrant et traité dans l'habitacle d'un véhicule automobile, comprenant un écran d'affichage 2 affichant une page 3, ou une partie de page ou une icône, comprenant un pictogramme 4.

Le pictogramme 4 représente une flèche directionnelle 5 symbolisant le cheminent du flux d'air depuis l'extérieur du véhicule jusque dans l'habitacle du véhicule.

La flèche 5 comporte des première et deuxième parties, 6 et 7 disposées de part et d'autre d'un rectangle 8 et s'étendent perpendiculairement aux grandes dimensions du rectangle 8.

La première partie 6, ou queue de la flèche 6 (à gauche du rectangle 8), représente le flux d'air extérieur avant son entrée dans l'habitacle et la deuxième partie se terminant par une pointe de flèche (à droite du rectangle 8), représente le flux d'air entrant à l'intérieur de l'habitacle, après traitement de l'air ; traitement symbolisé par le rectangle 8 que l'utilisateur associe aisément à un filtre notamment un filtre à particules.

Les première et deuxième parties constituent respectivement des premier et deuxième motifs 6 et 7 qui sont les supports d'une animation visuelle et notamment qui changent de couleur conformément à un code de couleur déterminé.

Le premier motif 6 (la première partie de flèche) peut prendre l'une des six couleurs définies dans le standard international AQI (Air Quality Index) ainsi qu'une septième couleur (Gris) indiquant que la mesure de la qualité de l'air est indisponible.

Cette mesure peut être indisponible, par exemple, quand le capteur de qualité d'air embarqué sur le véhicule est défaillant, ou quand l'information sur la qualité de l'air provenant d'un serveur distant ou d'un autre véhicule équipé d'un tel capteur est indisponible.

Le deuxième motif 7 (la deuxième partie de flèche) peut prendre l'une des trois couleurs suivantes : Vert, Orange ou Rouge qualifiant respectivement une Bonne C1 , Moyenne C2 et Mauvaise C3, la qualité de l'air à l'intérieur de l'habitacle après traitement ainsi qu'une quatrième couleur (Gris) indiquant que le traitement n'est pas disponible ou inefficace C4 (par exemple parce que le filtre participant au traitement de l'air est à changer, le dispositif d'ionisation de l'air est défaillant, ...)

Cette indication visuelle basée uniquement sur des changements de couleurs des premier et deuxième motifs 6 et 7 du pictogramme 4, permet à l'utilisateur d'apprécier de manière simple et intuitive, l'évolution et l'efficacité du traitement en temps réel durant toute la durée du traitement à partir de l'activation de la fonction de traitement d'air.

Un seul indicateur graphique, le pictogramme 4, présente simultanément, le niveau de qualité de l'air extérieur et le niveau de qualité de l'air à l'intérieur de l'habitacle.

Comme représenté à la figure 2, le pictogramme 4, est dupliqué en bas de la page 3 de l'écran 2 dans un bandeau de témoins de signalisation 9 et constitue l'un des témoins de signalisation, partageant l'espace d'affichage du bandeau 9 avec des voyants de signalisation arborant d'autres pictogrammes se rapportant à d'autres fonctions de traitement d'air.

Dans l'exemple décrit, le bandeau 9 est dédié aux fonctions HVAC du véhicule. HVAC (Heating, Ventilation and Air-Conditioning) est l'acronyme anglosaxon utilisé pour désigner le groupe de chauffage, ventilation et climatisation du véhicule.

Certains de ces pictogrammes sont également animés. C'est le cas par exemple du pictogramme de ventilation 10, le pictogramme de répartition de ventilation dans l'habitacle 11, et les pictogrammes indiquant les températures de consigne 12 et 13.

Dans l'exemple considéré, le groupe de climatisation du véhicule est bi-zone : deux températures de consigne sont affichées respectivement aux deux extrémités du bandeau 9.

L'écran 2 et le bandeau 9 sont aptes à afficher des informations graphiques avec des couleurs. Ils sont constitués, par exemple, d'un écran de type matrice de combiné ou un écran multi fonction central ou un dispositif de Vision tête Haute.

Le bandeau 9 est, par exemple, disposé sous l'écran central 2 de la planche de bord de véhicule automobile, non représentée ou dans le bas de la page d'écran 3 pour des écrans tactiles incorporant des pictogrammes.

Ce bandeau d'affichage 9 à l'instar de la barre des tâches utilisée comme interface graphique d'un système d'exploitation de type Windows®, permet de visualiser en permanence des fonctions du véhicule qui sont actives et ce, quelle que soit la page 3 affichée sur l'écran 2.

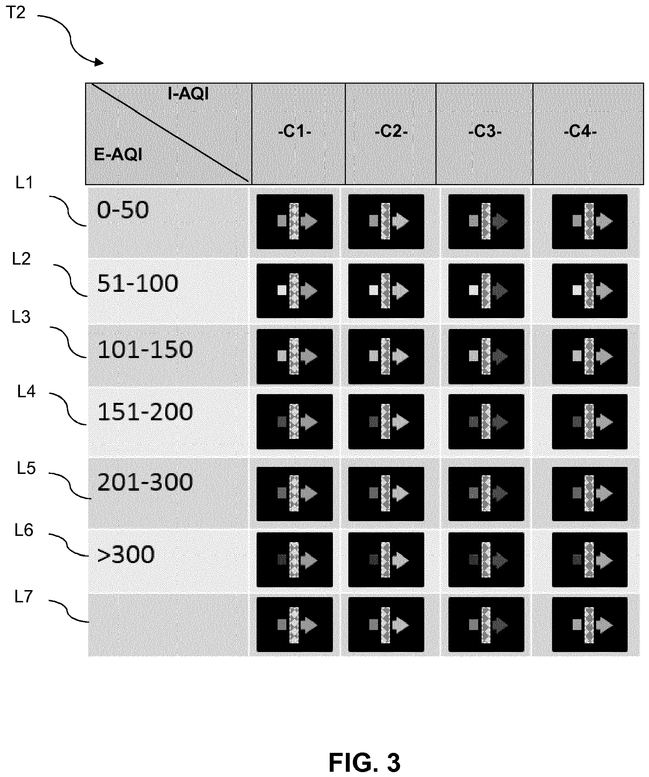

La figure 3 illustre, sous la forme d'un tableau T2 à sept lignes (E-AQI) quatre colonne (I-AQI), les différents états pris par le pictogramme 4 du système d'affichage selon l'invention correspondant aux différentes combinaisons possibles des états des premier et deuxième motifs 6 et 7. Ainsi, vingt-huit états pour une représentation visuelle fonctionnelle RF du traitement de l'air visant à l'amélioration de la qualité de l'air à l'intérieur de l'habitacle.

Parmi ces états, sans tous les décrire, on trouve dans le tableau de la figure 3, un état dans lequel la couleur du premier motif 6 est « Vert » et la couleur du deuxième motif 7 est également « Vert » soit le couple de coordonnées (L1, C1): concentration de l'air extérieur (E-AQI) = 0-50 « Bonne » A1 et le niveau de qualité de l'air à l'intérieur de l'habitable (I-AQI) = « Bon » C1.

Un autre état dans lequel la couleur du premier motif 6 est « Gris » ainsi que la couleur du deuxième motif 7, soit le couple de coordonnées (L7, C4) : concentration de l'air extérieur E-AQI = « Indisponible » et le niveau de qualité de l'air à l'intérieur de l'habitable I-AQI = « Indisponible ».

Et ainsi de suite.

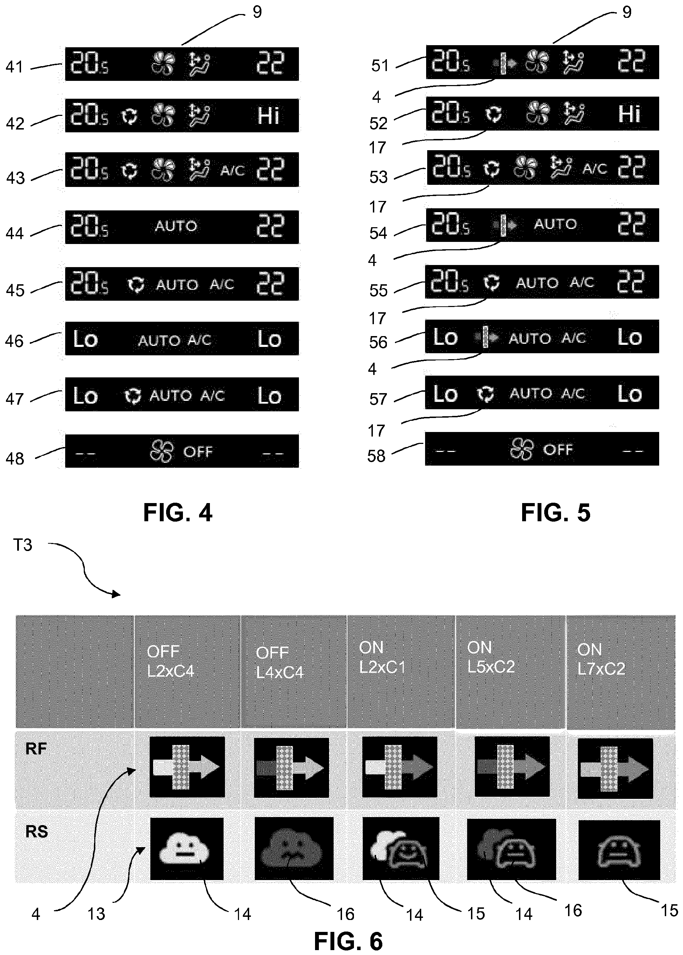

Les figures 4 et 5, illustrent respectivement, huit configurations 41- 48 et 51-58 d'affichage d'un bandeau 9 de témoins de signalisation dédié à une climatisation bizone avec la fonction de traitement d'amélioration de la qualité de l'air à l'intérieur de l'habitacle d'air non active OFF (Fig. 4) et active ON (Fig. 5)

Le bandeau 9 comprend un témoin de signalisation arborant un pictogramme 12 symbolisant le recyclage de l'air intérieur de l'habitacle. Le pictogramme 4 de traitement de l'air se substitue au pictogramme de recyclage d'air 17 quand la fonction de traitement d'amélioration de la qualité de l'air à l'intérieur de l'habitacle est activée.

La figure 6 illustre des états du pictogramme 4, dans sa représentation fonctionnelle RF, mis en correspondance avec un exemple de variante de pictogramme 13 dans une représentation stylisée RS, pour les mêmes états.

Les deux représentations RF et RS sont présentées sous forme d'un tableau T3 pour permette de comprendre les similitudes.

En reprenant le même système de coordonnées du tableau T2 de la figure 3, on a représenté cinq états possibles pris par les pictogrammes 4 et 13 suivant leur représentation fonctionnelle RF et stylisée RS en considérant deux états pour lesquels la fonction d'amélioration de la qualité de l'air est inactive OFF et trois états pour lesquels la fonction d'amélioration de la qualité de l'air est active ON.

Dans la variante (stylisée) RS, le pictogramme 13 comporte deux motifs 14 et 15 qui peuvent s'afficher seul ou en étant partiellement superposés.

Le niveau de qualité de l'air extérieur E-AQI est représenté par le premier motif 14 constitué d'un nuage coloré qui peut être rempli de l'une des six couleurs du standard AQI. Le nuage 14 est par ailleurs « personnalisé » par l'ajout d'un graphisme 16 rappelant l'expression d'un visage « schématisé » (rendu visible par l'absence de couleur sur le fond coloré du nuage 14).

L'indisponibilité de l'information sur la qualité de l'air extérieur (couleur grise de la première représentation RF) pour cette variante stylisée RS, n'est pas représentée par une couleur.

Le niveau de qualité d'air à l'intérieur du véhicule I-AQI est représenté par le deuxième motif 15 constitué du contour d'un véhicule vu de face. Le contour 15 peut prendre l'une des trois couleurs : Vert, Orange ou Rouge. Le contour 15 est lui aussi personnalisé par l'ajout d'une expression de visage 16 à l'intérieur du contour de même couleur que le contour 15.

Comme pour l'information sur la qualité de l'air extérieur E-AQI, l'indisponibilité (couleur grise de la représentation fonctionnelle RF) de l'information sur la qualité de l'air à l'intérieur de l'habitacle I-AQI n'est pas représentée par une couleur.

Dans cette variante (représentation stylisée RS), l'indisponibilité des informations sur la qualité de l'air extérieur et/ou à l'intérieur de l'habitacle est révélée par l'absence d'affichage d'un des deux motifs 14 ou 15. Ainsi, l'absence de nuage 14 signifie que l'information sur la qualité de l'air extérieur n'est pas disponible et de la même manière, l'absence de contour 15 de véhicule signifie que la mesure de la qualité de l'air à l'intérieur de l'habitacle n'est pas disponible.

L'affichage des deux motifs 14 et 15 qui se chevauchent (superposition partielle) traduit la disponibilité des deux informations avec leur code couleur et expression associés.

D'autres représentations sont bien sûr envisageables avec la contrainte de représenter graphiquement de manière simple, intuitive et attrayante le niveau de qualité de l'air extérieur et le niveau de qualité de l'air à l'intérieur de l'habitacle ainsi que l'évolution du traitement de l'air.

## Revendications

1. Système d'affichage d'information (1) d'un véhicule automobile affichant simultanément le niveau de qualité de l'air à l'extérieur du véhicule et le niveau de qualité de l'air à l'intérieur de l'habitacle du véhicule, ledit système (1) comprenant un pictogramme (4 ; 13) symbolisant une fonction de traitement de l'air visant à améliorer la qualité de l'air à l'intérieur de l'habitacle, ledit pictogramme (4 ; 13) comportant un premier motif (6 ; 14) représentatif du niveau de qualité de l'air à l'extérieur du véhicule et un deuxième motif (7 ; 15) représentatif du niveau de qualité de l'air à l'intérieur de l'habitacle du véhicule ; les premier (6 ; 14) et/ou deuxième (7 ; 15) motifs indiquant, par une animation visuelle déterminée et pendant toute la durée du traitement, le niveau de qualité de l'air à l'extérieur et/ou à l'intérieur de l'habitacle ainsi que son évolution pendant toute la durée du traitement et dans lequel le pictogramme (4; 13), dédié à l'information du niveau de qualité de l'air, fait partie d'un bandeau (9) de témoins de signalisation de véhicule automobile comportant au moins un deuxième pictogramme (17) dédié à l'information de recyclage de l'air à l'intérieur de l'habitacle..

2. Système d'affichage (1) selon la revendication précédente, dans lequel l'animation visuelle consiste en au moins un changement de couleur des premier (6 ; 14) et/ou deuxième motifs (7 ; 15) en fonction de l'évolution du niveau de qualité de l'air.

3. Système d'affichage (1) selon la revendication précédente, dans lequel le premier motif (6 ; 14) peut prendre une couleur déterminée choisie parmi un premier groupe déterminé de couleurs ; chacune des couleurs correspondant à un niveau de qualité de l'air extérieur.

4. Système d'affichage (1) selon l'une des revendications précédentes, dans lequel le deuxième motif (7 ; 15) peut prendre une couleur déterminée choisie parmi un deuxième groupe déterminé de couleurs ; chacune des couleurs correspondant à un niveau de qualité de l'air à l'intérieur de l'habitacle.

5. Système d'affichage (1) selon l'une des revendications 3 ou 4, **caractérisé en ce que** les premier (6) et deuxième (7) motifs représentent respectivement des première et deuxième parties d'au moins une flèche directionnelle (5) symbolisant le cheminement de l'air depuis l'extérieur du véhicule jusqu'à l'intérieur de l'habitacle du véhicule.

6. Système d'affichage (1) selon l'une des revendications 3 ou 4, dans lequel le premier motif (14) représente un nuage et le deuxième motif (15) représente le contour d'un véhicule.

7. Système d'affichage (1) selon l'une des revendications 5 ou 6, dans lequel l'absence d'un des premier (6 ; 14) ou deuxième (7 ; 15) motifs et/ou l'utilisation d'une couleur différente des premier et deuxième groupes déterminés de couleurs, indique l'indisponibilité de l'information relative au niveau de qualité d'air.

8. Système d'affichage (1) selon l'une des revendications précédentes, dans lequel l'affichage du pictogramme (4; 13) dédié à l'information du niveau de qualité de l'air se substitue à celui du pictogramme de recyclage d'air (12) quand la fonction de traitement visant à améliorer la qualité de l'air à l'intérieur de l'habitacle est activée.

9. Véhicule automobile comprenant le système d'affichage (1) selon l'une quelconque des revendications précédentes.
